# DEMANDE DE BREVET EUROPEEN

(11) **EP 3 144 846 A1**
(43) Date de publication de la demande: **22.03.2017**
(21) Numéro de dépôt: 15020167.1
(22) Date de dépôt: 20.09.2015
(51) Int. Cl.: G06K 7/10

(54) **TICKET OU COUPON DE JEU À TAGUER CONNECTÉ ET COMMUNICANT EN CHAMP PROCHE - NFC**

(71) Demandeur: Bernard-Hafner, Olivier, 34280 La Grande Motte (FR)
(72) Inventeur: BARELLI, Murielle, 13700 Marignane (FR); BERNARD-HAFNER, Olivier, 34280 La Grande Motte (FR)

(57) **Abrégé**

La présente invention concerne un ticket de jeu connecté et communicant en champ proche de type NFC (2) caractérisé en ce qu'il permet la déportation sur un serveur central (1) de la distribution et de la répartition de données mécaniques de jeu (101) et d'informations de jeu proprement dites (102), pour qu'elles soient connues afin de déterminer si un ticket de jeu connecté en champ proche est gagnant ou perdant.

Procédé interactif de déportation de la distribution et de la répartition de données de mécanique de jeu (101) et d'informations de jeu proprement dites (102), au moyen d'un couplage électromagnétique de communication en champ proche, de type NFC (2), à partir ou avec un support (2), spécifique s'associant à un terminal informatique ou un moyen radiotéléphonique mobile équipé d'une connexion NFC (5), d'un navigateur internet (6) le reliant à un serveur central (1) qui révèle un dispositif d'affichage (4) interactif sur l'écran d'un terminal informatique variété d'un périphérique réseau ou sur l'écran d'un terminal de radiotéléphonie mobile.

Des applications logicielles (3) incluant des applications exécutables (7) depuis un moyen de radiotéléphonie mobile ou un terminal informatique, qui sont aptes à être mis en oeuvre depuis un dispositif de communication en champ proche relié a une connexion internet.

## Description

### Domaine de l'invention

Le domaine de la présente invention concerne un ticket ou coupon de jeu connecté et communicant en champ proche. Le procédé dont il s'agit consiste à associer un jeu à un dispositif d'affichage sur un écran de terminal de radiotéléphonie mobile, doté d'un navigateur internet, au moyen d'un support sous forme de ticket, de coupon, de carte ou de marqueur, intégrant un accès à une base de données au moyen d'un procédé de communication en champ proche, usuellement, appelé NFC (En anglais - Near Field Communication), pour en gérer l'utilisation, la répartition et la distribution.

L'invention concerne un procédé de mise en oeuvre et d'utilisation, de la répartition et de la distribution d'une information de mécanique de jeu et d'information de jeu proprement dites appliquées sur un support intégrant un ou plusieurs éléments de mémoire, sous la forme d'un circuit intégré, réunissant tous les éléments d'une structure à base de microprocesseur, ainsi qu'une antenne voire une source d'énergie, permettant un accès à une base de données ; ouvrant un dispositif d'affichage sur l'écran d'un terminal de radiotéléphonie mobile, doté d'un navigateur internet acquis, par la mise en oeuvre d'un moyen électromagnétique, comportant un microcontrôleur de communication en champ proche de type NFC.

### Etat de la technique

On connaît actuellement et principalement, de l'état de la technique, deux technologies et un procédé qui ne sont à ce jour pas associés, la NFC, l'écran tactile et le ticket de jeu à gratter pris en tant qu'instrument applicatif d'une mécanique de jeu et d'information de jeu.

Les communications en champ proche usuellement appelées technologies NFC (Near Field Communication) sont dérivées de la technologie RFID (Radio Frequency Identification) utilisent des technologies de communication sans fil, à courte portée et haute fréquence, principalement basée sur la norme ISO 14443 (En anglais : International Standard Organisation).

Que ces dispositifs NFC soient passifs, actifs ou semi-actifs nous les désignerons par la suite sous le terme « transpondeur ».

La catégorie d'application NFC, à laquelle s'applique l'invention, est celle où un terminal est apte à lire les données d'un transpondeur. Dans l'exemple qui nous intéresse le terminal est un moyen de radiotéléphone mobile doté d'un navigateur internet et d'une connexion NFC, le transpondeur est quant à lui un ticket, un coupon, une carte ou un marqueur associé à un service, comme d'accéder au réseau internet, extraire l'adresse réticulaire d'une page WEB voire télécharger une application logicielle additionnelle etc.

Le transpondeur dispose d'une ou plusieurs antennes NFC et d'un ou plusieurs microprocesseurs réunissant une mémoire de données (RAM - En anglais : Random Access Memory ou EEPROM - En anglais : Electrically Erasable Programmable Read Only Memory), une mémoire de programme (ROM - En anglais : Read Only Memory, EEPROM), des interfaces parallèles ou de série, l'accès à des applications logicielles pour exécuter des connexions avec un serveur ou des terminaux. Plus précisément, d'un ou plusieurs microprocesseurs destinés à charger des instructions en mémoire, à les exécuter, à effectuer des opérations, d'une mémoire volatile ou RAM utilisée pour exécuter des instructions de code, stocker des données variables, d'une mémoire non volatile de type ROM, destinée à contenir des informations persistantes, et notamment des programmes à exécuter par le microprocesseur, d'une mémoire de type EEPROM, destinée à contenir des programmes ou des données, de divers périphériques d'entrée-sortie contrôlant l'antenne NFC voire des interfaces de connexions type connecteur USB type A ou B ou mini USB type A (En anglais : Universal Serial Bus). La communication entre ces modules s'effectue au moyen de bus de données et d'adresses, alors que le contrôle de(s) l'antenne(s), des communications NFC, et des conflits pouvant naître est assuré par le(S) microprocesseur(S) lui-même ou eux-mêmes.

Les écrans tactiles font aujourd'hui partie de notre quotidien. On en trouve dans les smartphones, tablettes et même dans des appareils publics tels que des plans interactifs ou cabines téléphoniques. Plusieurs technologies se sont succédées à ondes de surface, à infrarouge, optique ou encore FTIR (En anglais « Fourier Transform InfraRed spectroscopy », il existe divers procédés pour manipuler un système au doigt. Aujourd'hui seuls deux sont véritablement présents dans la vie quotidienne : les écrans résistifs et capacitifs.

L'écran résistif est composé d'une surface en plastique séparé d'une dalle en verre par un courant induit. Lors d'une pression sur sa surface, le plastique va toucher la dalle créant ainsi une modification du champ électrique que l'appareil interprète comme une information. L'avantage de ce procédé est qu'il offre une très grande précision sur la zone ciblée.

L'écran capacitif est désormais le plus répandu. On retrouve ce type d'écran sur une majorité des appareils mobiles, et la majorité des tablettes et smartphones en sont équipés. Contrairement à la technologie résistive, il est recouvert par une surface rigide en verre. Sa dalle est parcourue par une charge. Lorsque l'utilisateur y pose son doigt, il récupère cette charge. Le système calcule alors la position du doigt en fonction de la fuite de la charge. Il suffit donc d'effleurer l'écran pour que l'instruction soit prise en compte.

Le jeu est une activité de loisirs d'ordre physique ou bien psychique, soumise à des règles conventionnelles, à laquelle on s'adonne pour se divertir, tirer du plaisir et de l'amusement.

De manière générale un jeu associe d'une part des informations de mécanique de jeu expliquant au joueur la règle du jeu auquel il va participer qui permettent au joueur de le comprendre, et d'autre part des informations de jeu proprement dites qui lui permette de jouer et de découvrir qu'il a gagné ou non.

Ainsi par exemple, une mécanique de jeu à dès, de bingo, de mots, de labyrinthe peut être envisagée.

Pour leur part les informations de mécanique de jeu sont associées à des informations, proprement dites de jeu, sur lesquelles le joueur applique la mécanique des règles du jeu pour savoir s'il a gagné ou non. Ces informations de jeu sont par exemple des symboles de dés, de labyrinthe, de nombre, etc....

Ces informations sont usuellement réunies sur un ticket, un coupon, une carte ou tout autre support physique, où elles sont où ne sont pas recouvertes d'une pellicule de masquage à gratter ou non par le joueur, en fonction de l'intérêt qu'il existe à révéler ou à ne pas révéler au joueur ces informations selon les règles du jeu dont les informations procèdent. Ces informations de jeu permettent au joueur de jouer et de déterminer si le ticket de jeu est gagnant ou perdant, il en résulte la détermination et la répartition des gains. Le principe du jeu réside alors pour le joueur à se procurer un ticket de jeu de cette nature, à lire et à comprendre les informations de mécanique de jeu, puis à gratter la pellicule de masquage des informations de jeu pour les découvrir, et déterminer si le ticket est gagnant ou perdant, afin d'obtenir le cas échéant et au gré du hasard ses gains.

### L'Art antérieur

L'inconvénient majeur de la technique de l'art antérieur réside dans la méthode de distribution des lots gagnants et de leur matérialisation physique dans un ticket ou coupon à gratter ou non. *Cette matérialisation du ticket ou du coupon s'associe mal à une distribution matérielle des lots gagnants, qui peut rompre l'aspect aléatoire de la détermination et de la répartition des gains, et ainsi l'égalité des chances entre les joueurs.*

La présente invention propose une solution technique remarquable en ce qu'elle permet de répartir et distribuer les lots gagnants inversement au procédé antérieur en déportant cette répartition et cette distribution du ticket ou du coupon en tant que représentation physique et matérielle des lots gagnants. Ainsi le ticket ou le coupon dont la représentation du ou des lots est dématérialisée, déportée, cryptée et authentifiée répond à une répartition et une distribution des lots gagnants totalement aléatoire dépendant du hasard. Le respect de l'égalité des chances entre les joueurs se fait au moyen d'un ticket ou d'un coupon communicants et connectés en champs proche de type NFC lu par un terminal ou un moyen de radiotéléphonie mobile doté d'un navigateur internet et d'une connexion NFC.

L'objet de la présente invention est de proposer une solution technique singulière, qui dénote de l'ordinarité de l'art antérieur. Cette singularité résulte de la dématérialisation de la distribution, de la détermination et de la répartition des lots gagnants ou non.

Le ticket ou le coupon à gratter ou non, connecté et communicant en champ proche de type NFC répond à un acte déporté, immédiat, rapide, interactif, souple, connu sous le terme « Tag » : La distribution de la répartition des gains apparaît sur l'écran d'un terminal ou d'un moyen de radiotéléphonie mobile doté d'un navigateur internet et d'une connexion NFC. L'écran activé par ce tag est couplé aux informations de la mécanique de jeu et aux informations de jeu proprement dites.

Le présent procédé présente un large intérêt industriel, car on comprend qu'une telle structure de ticket ou de coupon de jeu à gratter ou non présente de nombreux avantages, notamment d'équité, de spontanéité, d'attractivité, de jouabilité du ticket de jeu.

### Description de l'invention

A cet effet, l'invention ainsi décrite concerne, selon son acceptation la plus générale, un procédé interactif ou non d'authentification, de cryptage, de distribution et de répartition de données, au moyen d'un couplage électromagnétique de communication en champ proche, de type NFC (2), à partir ou avec un support (ticket, coupon, carte, marqueur, autocollant) spécifique s'associant à un moyen radiotéléphonique mobile (5) doté d'un navigateur internet (6)et à un serveur central (1).

Il s'agit d'un procédé de distribution et répartition de données mécaniques de jeu (101) et d'informations de jeu proprement dites (102), pour qu'elles soient connues afin de déterminer si le ticket ou le coupon (2) connecté en champ proche de type NFC est gagnant ou perdant.

Un procédé de distribution et de répartition de données pertinentes complété au moyen d'un dispositif interactif d'affichage sur un écran de terminal de radiotéléphonie mobile (4) doté d'un navigateur internet (6) et d'une connexion NFC. Plus particulièrement, d'un template (4), d'un modèle, d'un gabarit, d'une forme, d'un graphisme de référence dans la conceptualisation d'un logiciel (3) à partir desquels on associe l'événement aléatoire, résultant de l'application d'une mécanique de jeu (101) à des informations de jeu proprement dites (102), pour déterminer si le jeu est gagnant ou perdant.

Le template (4) désigne, généralement, un modèle de conception de logiciel ou de présentation des données. On peut parler de « patron » comme en couture, de gabarit ou de kit graphique.

Le template de l'écran du terminal (4) ou du moyen de radiotéléphonie mobile peut être interactif en ce sens que l'écran est doté d'une fonction tactile. L'écran (4) peut ainsi recevoir une couche de procédés résistif ou capacitif susceptible de modifier localement sa capacité, au sens électronique du terme, c'est-à-dire provoquer une modification du champ électrique que l'appareil interprète comme une information.

Plus particulièrement dans le cas qui nous intéresse, cette modification permet d'agir sur l'écran (4) du moyen de radiotéléphonie mobile telle une pellicule de masquage à gratter par le joueur pour découvrir, si le besoin en est requis, les informations de mécanique du jeu (101) ou les informations de jeu proprement dites (102), de sorte si nécessaire que le joueur n'a pas accès directement à ces informations. Celles-ci ne lui sont alors accessibles qu'après un grattage virtuel de la pellicule de masquage de l'écran correspondant.

L'invention intègre un dispositif d'affichage sur un écran (4) de terminal de radiotéléphonie mobile, doté d'un navigateur internet (6), associé à un support de communication en champ proche de type NFC, associant des interfaces parallèles ou de série, ou une application logicielle additionnelle (3) pour exécuter des connexions avec un serveur (1) ou des terminaux, pour capter ou échanger des données pertinentes ou gérer des liens contextuels.

L'invention concerne un support sous forme de ticket (2), coupon, carte ou marqueur connecté et communicant en champ proche de type NFC donnant accès à une base de données quand il est associé à un moyen de radiotéléphonie mobile (5) intégrant une connexion NFC (2) et un navigateur internet (6).

L'invention comporte un serveur central (1), une pluralité de terminaux (2) correspondant à des tickets, des coupons, des cartes ou des marqueurs intégrant des moyens de communication en champ proche - NFC -, et des applications logicielles (3) qui incluent des applications exécutables (7) sur un terminal de radiotéléphonie mobile (5) doté d'un navigateur internet.

L'utilisateur accède au serveur central (1) par l'intermédiaire d'un équipement radiotéléphonique mobile (5) équipé d'un navigateur Internet (6) et d'une connexion NFC.

Ou l'utilisateur accède aussi au serveur central (1) au moyen d'une application logicielle exécutable (7) qu'il télécharge sur son moyen de radiotéléphonie mobile (5).

L'application logicielle (3) met en oeuvre une mécanique de jeu (101) et des informations de jeu proprement dites (102), représentées sous forme de template (4), au moyen d'un accès à un dispositif d'affichage sur un écran (4) de terminal de radiotéléphonie mobile doté d'un navigateur internet (6). Ce template graphisme de référence reprend des données d'authentification, de cryptage du support de type NFC (2) et permet de les associer à des informations de mécanique de jeu (101) et des informations de jeu proprement dites (102) comme par exemple des symboles de dés, de labyrinthe, de nombre, etc, afin d'assurer la distribution et la répartition du sort des gains y afférents.

La distribution et la répartition de ces informations de jeu proprement dites (102) appliquées à la mécanique de jeu (101) permettent de déterminer et de porter à la connaissance du joueur si le lot est gagnant ou perdant.

L'application logicielle (3) est exécutable et téléchargeable sur un moyen de radiotéléphonie mobile (5) ou tout autre terminal doté d'un navigateur internet (6) et d'une connexion NFC.

Le serveur central (1) est relié à une pluralité de terminaux (2) pour assurer la répartition et la distribution des informations de mécanique de jeu (101) et de jeu proprement dites (102) acquises par le dispositif d'affichage sur l'écran de radiotéléphonie mobile (5), et ce, au moyen de couplages électromagnétiques de type NFC (2).

En fait, la liaison serveur central (1) et application logicielle (3) se fait, classiquement, au moyen d'un protocole de communication en champ proche de type NFC (2), et d'un terminal de radiotéléphonique mobile (5) équipé d'un navigateur Internet (6) et d'une connexion NFC.

Le procédé dont il s'agit, associe un support (2) à des moyens électromagnétiques se composant de microcontrôleurs de communication en champ proche, lesquels contiennent l'adresse réticulaire d'une page web ou URL (En anglais : Uniform Resource Locator) contenant les informations de mécanique de jeu (101) et de jeu proprement dites (102). Ces informations peuvent bien évidemment être cryptées et authentifiées.

« Taguer » est l'action d'apposer son ticket, son coupon, sa carte ou son marqueur connecté et communicant en champ proche de type NFC (2) à proximité immédiate d'un moyen de radiotéléphonie mobile (5) doté d'un navigateur internet (6) et d'une connexion NFC.

Lors du « Tag » une adresse réticulaire de la page web est sélectionnée et apparaît sur l'écran du terminal de radiotéléphonie mobile (5) au moyen d'un navigateur Internet (6). Lors de la sélection de l'adresse réticulaire de la page web les informations de mécanique de jeu (101) et de jeu proprement dites (102) attachées au ticket, au coupon, à la carte ou marqueurs (2) sont transmises au serveur central (1), et les informations de mécanique de jeu (101) et de jeu proprement dites (102) cryptées et authentifiées, qui sont appelées déterminent et portent à la connaissance du joueur si le lot correspondant à son ticket, son coupon, sa carte ou son marqueur (2) est perdant ou gagnant. Cette répartition et cette distribution s'effectuent au moyen de l'affichage d'un template (4) approprié sur le moyen de radiotéléphonie adapté (5).

Les informations spécifiquement associées aux supports connectés et communicants en champ proche de type NFC (2), tel un ticket, un coupon, une carte, un marqueur ou tout autre type de support contiennent pour leur part les informations de mécanique de jeu (101) et du jeu proprement dites (102).

La page web ainsi adaptée ou extraite est retransmise à l'écran (4) du terminal de radiotéléphonie mobile au moyen du dispositif d'affichage conceptualisé dans l'application logicielle (3) sous la forme d'un template (4).

La page web ainsi extraite est adaptée spécifiquement en fonction des informations figurant sur le support associé (2). Le dispositif d'affichage sur l'écran du terminal de radiotéléphonie mobile (4), utilisé tel un template, un modèle, un gabarit, une forme, un graphisme de référence (4) dans la conceptualisation d'un logiciel (3) porté par le serveur central (1) permet de visualiser le sort aléatoire du gain attaché au support.

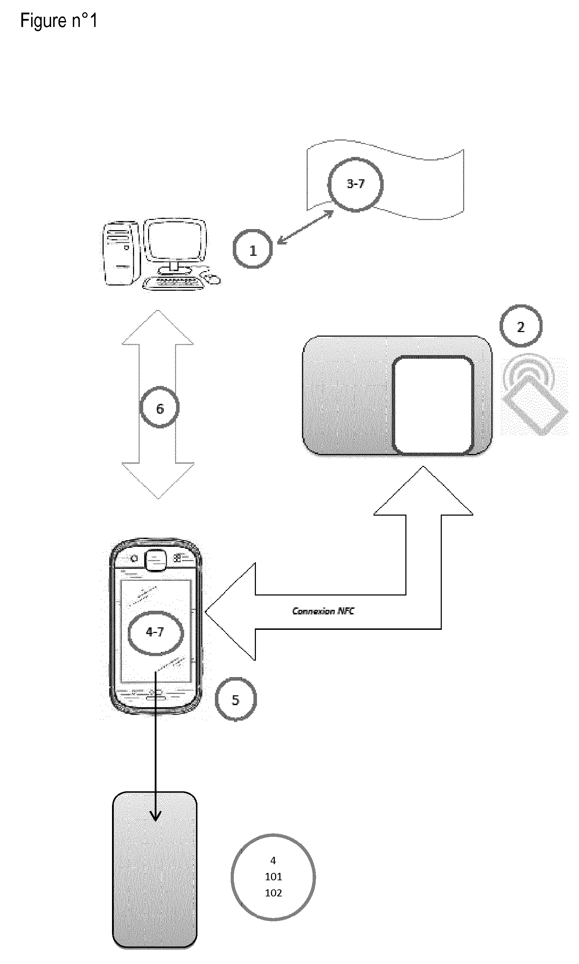

La figure n°1 représente l'architecture matérielle du procédé de répartition et de distribution de l'information de mécanique du jeu (101) et de jeu proprement dites (102) attaché au ticket, au coupon, à la carte ou au marqueur connectée et communicante en champ proche de type NFC (2).

Le support dont il s'agit représente des tickets, des coupons, des cartes, des marqueurs ou terminaux (2) intégrant des moyens de communication en champ proche, de type NFC, sont composés, généralement, en papier fort ou polymère moulé (PET polyethylene terephthalate - PVC polychlorure de vinyle ou chlorure de polyvinyle, ou autre), d'une forme rectangulaire ISO 216, notamment DIN A4, de type subdivision du format DIN A0 (DIN : En allemand Deutsches Institut für Normung) ou de type carte bancaire ISO/CEI 7810 (ISO: Organisation Internationale de Normalisation) voire d'une forme et d'une consistance autre.

Il peut s'agir de produit composite imprimable (91), composé d'une ou plusieurs couches support (porteuse(s)) sandwich, intégrant et/ou superposant une ou plusieurs couches de cartes informatives et communicantes.

La couche du ticket, du coupon, de carte ou du marqueur informative et communicante peut être collée de manière détachable de la couche porteuse, quand elle n'est pas intégrée dans la composition même du papier fort ou du polymère moulé.

La couche du ticket, du coupon, de la carte ou du marqueur informative et communicante dispose d'une ou plusieurs antennes NFC (92) et d'un ou plusieurs microprocesseurs (93) et (94) réunissant une mémoire de données (RAM - En anglais : Random Access Memory ou EEPROM - En anglais : Electrically Erasable Programmable Read Only Memory), une mémoire de programme (ROM - En anglais : Read Only Memory , EEPROM), des interfaces parallèles ou de série, l'accès à des applications logicielles pour exécuter des connexions avec un serveur ou des terminaux. Le support peut gérer et utiliser une source d'énergie indépendante (95).

L'invention globale constitue un substitut remarquable, une variante, du ticket de jeu à gratter ou non.

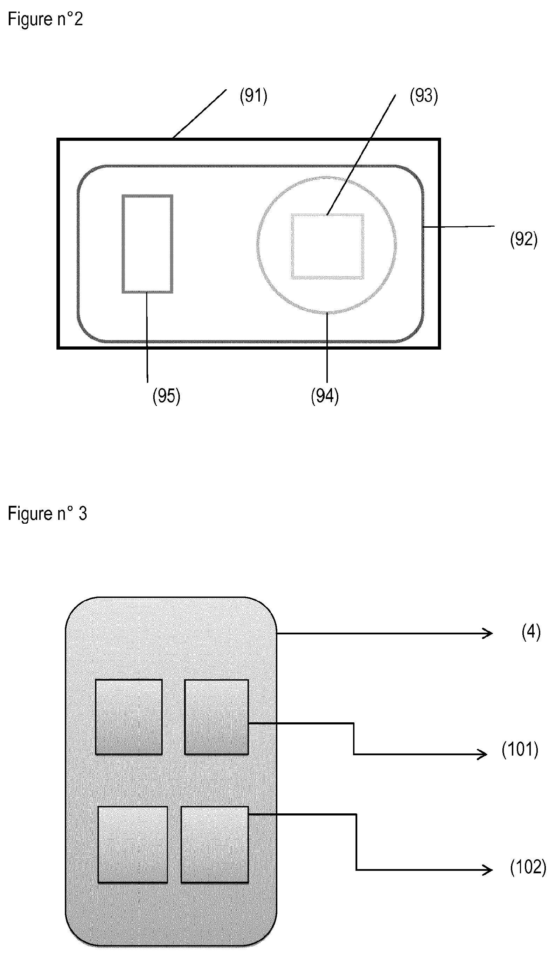

La figure n°2 : l'invention du ticket ou coupon connecté et communicant en champ proche est décrite, par référence au dessin annexé.

La figure n°3 : l'invention du template associé au moyen de radiotéléphonie mobile équipé d'un navigateur internet couplé à un protocole de communication en champ proche de type NFC est décrite par référence au dessin annexé.

## Revendications

1. Ticket ou coupon de jeu, connecté et communicant en champ proche de type NFC (2), crypté ou non interactif ou non **caractérisé en ce qu'**il permet la déportation sur un serveur central (1) de la distribution et de la répartition de données mécaniques de jeu (101) et d'informations de jeu proprement dites (102), pour qu'elles soient connues afin de déterminer si un ticket de jeu ou un coupon de jeu connecté en champ proche (2) est gagnant ou perdant contenant :
- Tickets, coupons, cartes, marqueurs, autocollants (2) ou encore tous supports de toutes sortes intégrant des moyens de communication en champ proche, de type NFC. Produit composite imprimable, composé d'une ou plusieurs couches support (porteuse(s)) sandwich intégrant et/ou superposant une ou plusieurs couches de cartes informatives et communicantes. La couche de carte informative et communicante peut être collée de manière détachable de la couche porteuse, quand elle n'est pas intégrée dans la composition même du papier fort ou du polymère moulé. La couche de carte informative et communicante est **caractérisée en ce qu'**elle dispose d'une ou plusieurs antennes NFC (92) et d'un ou plusieurs microprocesseurs réunissant une mémoire de données (93) (RAM
- EEPROM), une mémoire de programme (94) (ROM - EEPROM), des interfaces parallèles ou de série, l'accès à des applications logicielles pour exécuter des connexions avec un serveur ou des terminaux. Le support peut gérer et utiliser une source d'énergie indépendante (95).
- un terminal informatique variété d'un périphérique réseau ou un moyen radiotéléphonique mobile équipé d'une connexion NFC (5) et d'une connexion ou d'un navigateur internet (6).
- Un dispositif d'affichage sur l'écran d'un terminal de radiotéléphonie mobile (4) ou l'écran d'un terminal informatique variété d'un périphérique réseau, **caractérisé en ce qu'**il s'affiche sur l'écran du terminal informatique ou du terminal de radiotéléphonie mobile, tel un template (4), un graphisme de référence dans la conceptualisation d'un logiciel, à partir desquels on associe des informations de mécanique de jeu (101) et des informations de jeu proprement dites (102) comme par exemple des symboles de dés, de labyrinthe, de nombre, etc. ...., extraites du serveur au moyen des données d'identification cryptées du support de type NFC, notamment ticket, coupon, carte, marqueur (2).
- Un serveur central (1).

2. Procédé, selon l'une des revendications 1 **caractérisé en ce qu'**il comprend les étapes suivantes :
• Un support (2) de moyens électromagnétiques composé de microcontrôleurs de communication en champ proche, lesquels contiennent l'adresse réticulaire d'une page web ou URL, crypté ou non, contenant des informations de mécanique de jeu (101) ou des informations de jeu proprement dites (102).
• L'adresse réticulaire de la page web est sélectionnée depuis un terminal informatique ou un moyen de radiotéléphonie mobile (5) doté d'un navigateur Internet et d'une connexion NFC (6) appliqué ou couplé au support (2) de moyens électromagnétiques composé de microcontrôleurs de communication en champ proche.
• L'utilisateur accède au serveur central (1) par l'intermédiaire d'un équipement radiotéléphonique mobile (5) voire d'un terminal équipé d'un navigateur Internet (6) et d'une connexion NFC.
• Lors de la sélection de l'adresse réticulaire de la page web, les données cryptées d'identification du support communicant en champ proche de type NFC (2) sont transmises au serveur central (1) ; et les informations de mécanique de jeu (101) et de jeu proprement dites (102) associés aux données d'identification cryptées sont appelées.
• La page web ainsi extraite est adaptée, spécifiquement, en fonction des informations de mécanique de jeu (101) et des informations de jeu proprement dites (102), sur le dispositif d'affichage de l'écran (4) du terminal informatique ou du moyen de radiotéléphonie mobile (5), utilisé tel un template, un modèle, un gabarit, une forme, un graphisme de référence (4) dans la conceptualisation d'un logiciel (3) porté par le serveur central (1).
• La page web ainsi adaptée ou extraite est retransmise à l'écran (4) du terminal informatique ou du moyen de radiotéléphonie mobile (5) au moyen du dispositif d'affichage conceptualisé dans l'application logicielle (3) sous la forme d'un template (4).
• La page web ainsi extraite, sous la forme d'un template (4), peut ou peut ne pas être interactive selon que l'écran (4) du terminal informatique ou du moyen de radiotéléphonie mobile (5) soit doté d'une fonction tactile.
• L'écran (4) peut ainsi recevoir une couche de procédés résistifs ou capacitifs susceptibles de modifier localement sa capacité, au sens électronique du terme, c'est-à-dire provoquer une modification du champ électrique que l'appareil interprète comme une information.
• Le cas échéant cette modification du champ électrique permet d'agir sur l'écran telle une pellicule de masquage à gratter par le joueur pour découvrir, si le besoin en est requis, les informations de mécanique du jeu (101) ou les informations de jeu proprement dites (102), de sorte si nécessaire que le joueur n'a pas accès directement à ces informations. Celles-ci ne lui sont alors accessibles qu'après un grattage virtuel de la pellicule de masquage de l'écran (4) correspondant.
• L'application logicielle (3) met en oeuvre la mécanique de jeu (101) et les informations de jeu proprement dites (102), représentées sous forme de template (4), au moyen d'un accès à un dispositif d'affichage sur un écran (4) de terminal de radiotéléphonie mobile (5) ou un terminal informatique doté d'un navigateur internet (6) et d'une connexion NFC.
• Ce template graphisme de référence reprend des données d'authentification, de cryptages du support de type NFC et permet de les associer à des informations de jeu proprement dites (102) comme par exemple des symboles de dés, de labyrinthe, de dominos, de nombre, etc., pour les distribuer et les répartir.
• La distribution et la répartition de ces informations de jeu (102) appliquées à la mécanique de jeu proprement dites (101) permettent de déterminer et de porter à la connaissance du joueur si le lot est gagnant ou perdant.
• L'utilisateur peut accéder aussi au serveur central (1) au moyen d'une application logicielle exécutable (7) qu'il télécharge sur son moyen de radiotéléphonie mobile.

3. Le programme d'ordinateur (3) selon les revendications 1 et 2 comprenant des portions, moyens et instructions de code pour l'exécution des étapes du procédé selon la revendication 2 depuis un terminal informatique variété d'un périphérique réseau ou un moyen de radiotéléphonie mobile (7) lorsque ledit programme est exécuté.

4. Le programme d'ordinateur selon la revendication 3 incluant des applications exécutables depuis un moyen de radiotéléphonie mobile (7) ou un terminal informatique variété d'un périphérique réseau mettant en oeuvre un dispositif de communication en champ proche et une connexion internet, tel que défini dans la revendication 1, comprenant des portions, moyens et instructions de code de programme enregistrés sur le support (2) qui lorsque le programme exécuté met en oeuvre les moyens de programmation pour effectuer les étapes du procédé de gestion, de répartition et de distribution des données selon la revendication 2.
